Europäisches Patentamt

(19) European Patent Office

Office européen des brevets

(11) Veröffentlichungsnummer: **0 186 770 B1**

# EUROPÄISCHE PATENTSCHRIFT

(45) Veröffentlichungstag der Patentschrift: **08.01.92**

(51) Int. Cl.⁵: **H04Q 3/60, H04M 7/14**

(21) Anmeldenummer: **85114765.2**

(22) Anmeldetag: **21.11.85**

(54) **Schaltungsanordnung für Fernmeldevermittlungsanlagen, insbesondere Fernsprechvermittlungsanlagen, mit an Vermittlungsstellen über Leitungsbündel angeschlossene Untervermittlungsstellen.**

(30) Priorität: **21.12.84 DE 3446995**
**11.01.85 DE 3500762**

(43) Veröffentlichungstag der Anmeldung:
**09.07.86 Patentblatt 86/28**

(45) Bekanntmachung des Hinweises auf die
Patenterteilung:
**08.01.92 Patentblatt 92/02**

(84) Benannte Vertragsstaaten:
**AT BE CH DE FR GB IT LI NL SE**

(56) Entgegenhaltungen:
**EP-A- 0 121 237**
**DE-A- 2 225 233**
**GB-A- 2 127 651**

(73) Patentinhaber: **SIEMENS AKTIENGESELL-SCHAFT**
**Wittelsbacherplatz 2**
**W-8000 München 2(DE)**

(72) Erfinder: **Seidel, Günther, Ing. grad.**
**August-Zeune-Weg 4**
**W-8000 München 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung für Fernmeldevermittlungsanlagen, insbesondere Fernsprechvermittlungsanlagen, in denen an eine Vermittlungsstelle eine Untervermittlungsstelle, insbesondere ein Konzentrator, über ein Bündel von Leitungen angeschlossen ist, wobei für deren verbindungsindividuelle Belegung in der Vermittlungsstelle und in der Untervermittlungsstelle jeweilige Auswahlschaltungen vorgesehen sind und wobei die Leitungen wenigstens teilweise alternativ sowohl in der einen als auch in der anderen Verbindungsaufbaurichtung belegbar sind, und wobei in den Fernmeldevermittlungsanlagen für von an die betreffende Untervermittlungsstelle angeschlossenen Teilnehmerstellen her initiierten Ursprungsverbindungen, die in der einen Verbindungsaufbaurichtung herzustellen sind, bei Belegtsein der bereitgestellten Leitungen Wartemöglichkeit besteht, jedoch nicht - zumindest in wesentlich geringerem Ausmaß - für Zielverbindungen zu diesen an die betreffende Untervermittlungsstelle angeschlossenen Teilnehmerstellen.

Eine Schaltungsanordnung dieser Art ist bereits durch die Zeitschrift "telcom report" (englischsprachige Ausgabe) special issue, Volume 5, No.4, Dec. 1982, S.262-266 bekannt. Die zuvor genannte Wartemöglicheit ist normalerweise zeitlich begrenzt auf einen für den praktischen Betrieb angemessenen Umfang. Diese Wartemöglichkeit erhöht bekanntlich die Verkehrsleistung eines Konzentrators. Sie läßt sich in relativ einfacher Weise realisieren, indem die Anschaltung des Wähltones für einen Teilnehmer, der eine Verbindung herzustellen wünscht, entsprechend der jeweiligen Betriebssituation etwas später durchgeführt wird, und zwar jeweils immer erst dann, wenn eine entsprechende Leitung für eine beabsichtigte Verbindungsherstellung verfügbar ist. - An dieser Stelle sei bemerkt, daß es sich bei den genannten Leitungen auch jeweils um ein Kanalpaar eines PCM-Zeitmultiplexsystems oder anderen Digitalsystems handeln kann. Unter Teilnehmerstellen sind auch Datenendgeräte und entsprechende Endstellen jeder systembedingt anderen Art zu verstehen.

Bei den genannten Ursprungsverbindungen handelt es sich also jeweils um Durchschaltvorgänge zu Beginn eines Verbindungsaufbaues. Beim Ursprungsverkehr in der angegebenen Weise eine Wartemöglichkeit vorzusehen, ist relativ einfach und ohne besonderen Aufwand realisierbar. Wie erwähnt, braucht dem jeweils rufenden Teilnehmer nur der Wählton entsprechend später zugeschaltet zu werden. Dagegen würde eine vergleichbare Wartemöglichkeit auch bei Zielverbindungen eine vorübergehende Speicherung, Belegung einschließlich deren Wählinformationen und/oder Steuerungsinformationen oder dergleichen voraussetzen.

Ist in dem erläuterten Zusammenhang das betrachtete Leitungsbündel stark ausgelastet, so treten vermehrt Besetztfälle auf. Davon werden hauptsächlich - mangels der erwähnten Wartemöglichkeit - die Durchschalteversuche für Zielverbindungen betroffen. Sofern Verbindungen zu Verlust gehen müsse, ist es an sich einerlei, zu welchem Zeitpunkt einer Verbindungsherstellung ein Besetztfall eintritt. Hinsichtlich der Verkehrsleistung des gesamten Verbindungsleitungsnetzes und hinsichtlich des Bedienungskomforts ist es indessen günstiger, wenn Besetzfälle, soweit diese nicht vermeidbar sind, bei Verbindungsherstellungsversuchen jeweils bereits zu einem möglichst frühen Zeitpunkt eintreten. Abgesehen davon aber ist es für die Leistungsfähigkeit des Verbindungsleitungsnetzes als auch der informationsverarbeitenden Steuerungseinrichtungen der Gesamtheit der miteinander verbundenen Fernmeldevermittlungsstellen günstiger, wenn unter der Voraussetzung, daß Verbindungen überlastungsbedingt zu Verlust gehen müssen, solche Verbindungen zu Verlust gehen, für die jeweils weniger Arbeit an Informationsverarbeitungs- und Steuerungsvorgängen geleistet worden ist, als solche Verbindungen, für die schon relativ viel diesbezügliche Arbeit erbracht werden mußte.

Es sei an dieser Stelle noch erwähnt, daß aus der DE-A-2 225 233 eine Schaltungsanordnung für Fernmeldevermittlungsnetze bekannt ist, bei der eine Mehrzahl von Vermittlungsstellen über Bündel von Nachrichtenkanälen miteinander verbunden sind, wobei die Teilnehmeranschlüsse jeweils direkt mit einer Vermittlungsstelle, oder über eine Untervermittlungsstelle, die über ein Bündel von Nachrichtenkanälen mit einer Vermittlungsstelle verbunden ist, verbunden sind. Bei dieser Schaltungsanordnung ist für den Fall, daß in einem für eine Verbindungsdurchschaltung zwischen zwei Vermittlungsstellen zu benutzenden Leitungsbündel keine Leitung mehr frei ist vorgesehen, daß eine zwischen den beiden Vermittlungsstellen bestehende Datenverbindung zugunsten dieser durchzuschaltenden Verbindung aufzugeben und hierzu auszulösen ist. Ein weitergehender Hinweis zur Bewältigung der Problematik der Verkehrsverdrängung von im Aufbau befindlichen Verbindungen, für die bereits ein relativ hoher Aufwand an Informationsverarbeitungs- und Steuerungsvorgängen geleistet worden ist, durch im Aufbau befindliche Verbindungen, für die ein noch relativ geringer diesbezüglicher Aufwand erbracht werden mußte, ist aus dieser Schrift nicht ersichtlich.

Für die Erfindung besteht die Aufgabe, bei einer Schaltungsanordnung der eingangs angegebenen Art die Effektivität der Leistungsfähigkeit des Verbindungsleitungsnetzes und der informationsverarbeitenden Steuerungseinrichtungen, die der Abwicklung des Vermittlungsbetriebes dienen, zu steigern.

Die Erfindung löst die gestellte Aufgabe dadurch, daß in der Vermittlungsstelle ein Steuerwerkspeicher mit leitungsindividuellen Speicherzellen zur Speicherung von Informationen darüber vorgesehen ist, ob die zugehörige Leitung frei oder belegt ist und - im Fall des Belegtseins - ob es sich um eine Zielverbindung oder eine Ursprungsverbindung handelt, und - im Falle einer Ursprungsverbindung - ob der Verbindungsaufbau sich in einem Stadium befindet in dem er zugunsten einer Zielverbindung abgebrochen werden kann und daß die vermittlungsseitige Auswahleinrichtung anhand der in den leitungsindividuellen Speicherzellen gespeicherten Informationen veranlaßt

- daß bei Belegtsein sämtlicher Leitungen diejenigen, die für Ursprungsverbindungen belegt sind und
  über die der betreffende Verbindungsaufbau erst noch bevorsteht oder noch in der Abwicklung begriffen ist, bei neu auftretenden Durchschaltungsaufträgen zur Herstellung von Zielverbindungen für eine Suche und Auswahl einer Leitung unter Abbruch des jeweils der Herstellung einer Ursprungsverbindung über diese Leitung dienenden Verbindungsaufbaues zur Verfügung stehen, und

- daß der rufende Teilnehmer bei der abgebrochenen Ursprungsverbindung Besetztsignal erhält und

- daß über die betreffende Leitung anstelle der Ursprungsverbindung die betreffende Zielverbindung hergestellt wird, so daß eine Verkehrsverdrängung von Zielverbindungen durch Ursprungsverbindungen unterbunden ist.

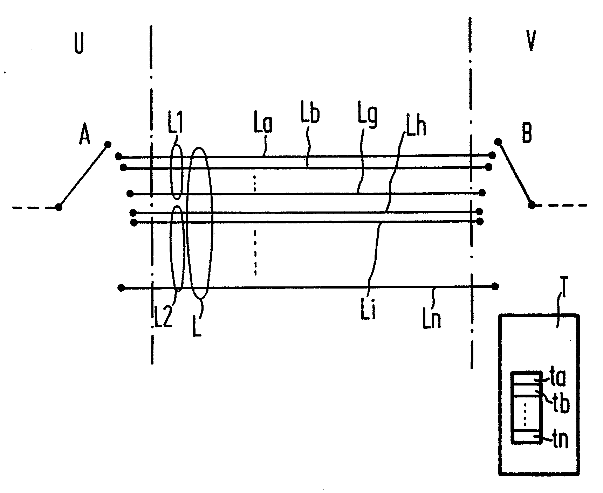

In der Zeichnung ist ein Ausführungsbeispiel der Erfindung nur in wesentlich zu ihrem Verständnis beitragenden Bestandteilen dargestellt. Die Beschreibung geht davon aus, daß Fernmeldevermittlungsanlagen bekannt sind, in denen an eine Vermittlungsstelle Untervermittlungsstellen über je ein Bündel von verbindungsindividuellen Leitungen angeschlossen sind. Fernsprechvermittlungsanlagen dieser Art, bei denen es sich um Konzentratoren als Untervermittlungsstellen handelt, sind durch die DE-OS 30 16 511, 30 16 547 und 32 24 459, sowie durch die darin angegebene Literatur bekannt. Es erübrigt sich deshalb, Fernsprechvermittlungsanlagen mit Untervermittlungsstellen, z.B. Konzentratoren, in ihrer Gesamtheit zu beschreiben.

In der Zeichnung ist eine Vermittlungsstelle V und eine als Konzentrator ausgebildete Untervermittlungsstelle U an gedeutet, sowie ein Bündel von Verbindungsleitungen L. Diese Verbindungsleitungen sind jeweils zur Durchschaltung einer Verbindung verbindungsindividuell belegbar. Jede dieser Verbindungsleitungen dient zur Nachrichtenübertragung in beiden Richtungen. Sind diese Verbindungsleitungen durch ein mehrkanäliges Übertragungssystem, zum Beispiel PCM-System realisiert, so gehören jeweils zu einer "Verbindungsleitung" in an sich bekannter Weise zwei Übertragungskanäle, und zwar je einer für je eine der beiden Nachrichtenübertragungsrichtungen. In diesem Falle ist eine Verbindungsleitung also durch ein Kanalpaar realisiert. Zwecks einfacherer Beschreibung ist anschließend jedoch vorwiegend von "Verbindungsleitungen" die Rede.

Die Verbindungsleitungen L in der Zeichnung sind jeweils in der einen Verbindungsaufbaurichtung, zum Beispiel von einer an den Konzentrator U angeschlossenen Teilnehmerstelle zur Vermittlungsstelle V hin und in der anderen Verbindungsaufbaurichtung, also von der Vermittlungsstelle V zu einer an den Konzentrator U angeschlossenen Teilnehmerstelle hin verbindungsindivuduell belegbar. Zur Auswahl einer freien Leitung sind Auswahleinrichtungen A und B im Konzentrator U und in der Vermittlungsstelle V vorgesehen. Die Verbindungsleitungen dienen also zur Verbindungsherstellung in beiden Verbindungsaufbaurichtungen. Ein Teil der Verbindungsleitungen kann für Verbindungsherstellungsvorgänge nur in der einen Verbindungsaufbaurichtung vorgesehen sein. Ebenso kann ein Teil von Verbindungsleitungen für Verbindungsherstellungsvorgänge nur in der anderen Verbindungsaufbaurichtung vorgesehen sein. Darüber hinaus kann die Gesamtheit oder nur ein Teil der Verbindungsleitungen für Verbindungsherstellungsvorgänge sowohl in der einen als auch in der anderen Verbindungsaufbaurichtung vorgesehen sein; dies bedeutet aber bekanntlich zugleich, daß eine Verbindungsleitung jeweils für eine Verbindungsherstellung immer nur in einer der beiden Verbindungsherstellungsrichtungen belegt werden kann.

Wie es für Vermittlungsstellen und an diese angeschlossene Konzentratoren bekannt ist, besteht für Konzentratorteilnehmer, also für an einen Konzentrator U angeschlossene Teilnehmerstellen bei Initiierung jeweils eines Verbindungsherstellungsvorganges Wartemöglichkeit. Diese Wartemöglichkeit kann in bekannter Weise zeitlich begrenzt sein. Wünscht ein Konzentratorteilnehmer eine Verbindung herzustellen, so schließt er durch Abnehmen des Handapparates an seiner Teilnehmerstation die Teilnehmerleitungsschleife. Dies wird im Konzentrator in bekannter Weise erkannt, und mit Hilfe der Auswahleinrichtung A wird eine freie Verbindungsleitung gesucht. Ist eine freie Verbindungsleitung gefunden, so wird die Teilnehmerstation im Konzentrator U mit dieser Verbindungsleitung und weiterhin über dieselbe in der Vermittlungsstelle V mit einer freien Wahlkennzeichen-Empfanpfangseinrichtung verbunden. Von hier wird Wählton zu der betreffenden Teilnehmerstation hin ausgesendet, woraufhin der Teilnehmer mit der Abgabe der aus den einzelnen aufeinanderfolgenden Ziffern bestehenden Wahlinformation beginnen kann. Die Wahlinformationen werden mit Hilfe der Wahlkennzeichen-Empfangseinrichtung aufgenommen und dienen zur Herstellung der jeweils gewählten Verbindung.

Die angesprochene Wartemöglichkeit ist also in sehr einfacher Weise realisierbar. Findet sich nach Abnehmen des Handapparates an der genannten Teilnehmerstelle nicht unmittelbar eine freie Verbindungsleitung, so kann der Auswahlvorgang solange fortgesetzt werden, bis eine Verbindungsleitung wieder frei wird (zum Beispiel durch Auslösung einer zu früherem Zeitpunkt durchgeschalteten Verbindung), oder es kann bei einem Besetztsein aller Verbindungsleitungen der Auswahlvorgang verhindert oder angehalten werden, um bei Freiwerden einer Verbindungsleitung mittels einer alle Verbindungsleitungen auf ihren Belegungszustand überwachenden Leitungsüberwachungseinrichtung erneut angelassen zu werden. Auswahleinrichtungen, die in dieser Weise betrieben werden, dürfen als in der Fachwelt bereits vielfältig bekannt vorausgesetzt werden.

Die zuvor beschriebene Wartemöglichkeit für Teilnehmer, die eine Verbindungsherstellung beginnen wollen, ist zweckmäßigerweise zeitlich begrenzt. Hierzu kann eine Zeitüberwachungseinrichtung vorgesehen werden, die die Dauer jeweils eines Auswahlvorganges abmißt und zeitlich begrenzt, indem bei einer Zeitüberschreitung der betreffende Auswahlvorgang abgebrochen und an die Teilnehmerleitung der betreffenden Teilnehmerstation ein Besetztsignal, zum Beispiel Besetztton, im Konzentrator U angeschaltet wird.

Die Auswahlvorgänge können in an sich bekannter Weise so ablaufen, daß eine entsprechend ausgebildete Auswahleinrichtung immer alle Verbindungsleitungen nacheinander oder immer alle Verbindungsleitungen gleichzeitig auf ihren Belegungszustand prüft, das heißt ob sie jeweils frei oder besetzt sind. Oder es kann eine Auswahleinrichtung vorgesehen werden, die einerseits alle Verbindungsleitungen eines Teilbündels L1 und andererseits alle Verbindungsleitungen eines anderen Teilbündels L2 jeweils nacheinander, oder vorzugsweise gleichzeitig auf ihren Belegungszustand prüft, aber die Verbindungsleitungen dieser beiden Teilbündel unabhängig voneinander prüft, was wiederum bezüglich der beiden Teilbündel gleichzeitig oder nacheinander geschehen kann.

Eine von einer der an den Konzentrator U angeschlossenen Teilnehmerstationen über eine der Verbindungsleitungen zur Vermittlungsstelle V hin durchgeschaltete Teilverbindung ist eire Ursprungsverbindung. Ist eine Verbindung bereits bis zur Vermittlungsstelle V hin durchgeschaltet und wird sie zu einer Teilnehmer-Teilnehmer-Verbindung dadurch vervollständigt, daß die weitere Verbindungsdurchschaltung über eine Verbindungsleitung zum Konzentrator U und in diesem zu einem angewählten Konzentratorteilnehmer hin erfolgt, so handelt es sich bei diesem letzten Abschnitt der Verbindungsherstellung um eine Zielverbindung. Wie zuvor ausgeführt wurde, besteht für Ursprungsverbindungen eine Wartemöglichkeit, jedoch nicht für Zielverbindungen. Wird eine Verbindung von irgendwoher bis zur Vermittlungsstelle V hin aufgebaut (hierbei kann es sich um eine nacheinander über mehrere Ortsvermittlungsstellen hergestellte Ortsverbindung oder auch um eine Fernverbindung oder eine Auslandsverbindung handeln), und ist der betreffende Verbindungsaufbau durch Durchschaltung einer Zielverbindung zu einem Konzentratorteilnehmer, dessen Teilnehmerstation also an den Konzentrator U angeschlossen ist, zu vervollständigen, so würde eine Wartemöglichkeit bei der Auswahl einer freien Leitung mittels der Auswahleinrichtung B es erforderlich machen , daß entsprechende Wahlinformationen zwischengespeichert werden. Es ist vorgesehen, daß eine Wartemöglichkeit nicht für Zielverbindungen besteht (oder nur in einem vergleichsweise sehr geringen Ausmaß).

Durch die zuvor beschriebene Wartemöglichkeit, die für Ursprungsverbindungen gegeben ist, dagegen nicht für Zielverbindungen, ergibt sich zunächst eine gewisse Priorisierung von Ursprungsverbindungen gegenüber Zielverbindungen hinsichtlich der Auswahl und Zurverfügungstellung jeweils einer freien Verbindungsleitung. In diesem Zusammenhang ist nun beachtlich, daß der jeweils für eine Ursprungsverbindung bereits geleistete Arbeitsaufwand an Informationsaufnahme- und -verarbeitungsvorgängen sowie von entsprechenden Steuerungs- und Einstellvorgängen noch relativ sehr gering ist. Handelt es sich dagegen um eine Zielverbindung, die zu einem Konzentratorteilnehmer hin durchzuschalten ist, so ist für die Verbindungsherstellung bis zur Vermittlungsstelle V hin bereits ein erheblicher Aufwand an Informationsaufnahme- und -verarbeitungsvorgängen sowie von Steuer- und Einstellvorgängen geleistet worden, und zwar - soweit es sich um zentralgesteuerte Vermittlungsanlagen handelt - in hohem Maße von entsprechenden zentralen oder dezentralen Verarbeitungs-, Steuerungs- und Einstelleinrichtungen. Darüber hinaus ist zwischen der in diesem Falle fernen Ursprungsvermittlungsstelle und der Zielvermittlungsstelle (V) in jedem Leitungsabschnitt bereits eine Verbindungsleitung für den betreffenden Verbindungsaufbau in Anspruch genommen worden, also insgesamt eine beachtliche Anzahl von Verbindungsleitungen.

Um nun der oben angesprochenen unerwünschten Priorisierung von Ursprungsverbindungen gegenüber Zielverbindungen bei der Auswahl jeweils einer freien Verbindungsleitung zu begegnen (dies gilt besonders bei Überlast und/oder Schieflast), ist erfindungsgemäß vorgesehen, daß bei Belegtsein sämtlicher Leitungen diejenigen, die für Ursprungsverbindungen belegt sind, und über die der betreffende Verbindungsaufbau noch bevorsteht oder noch in der Abwicklung begriffen ist, bei neu auftretenden Durchschaltungsaufträgen zur Herstellung von Zielverbindungen für eine Suche und Auswahl einer Leitung unter Abbruch des jeweils der Herstellung einer Ursprungsverbindung über diese Leitung dienenden Verbindungsaufbaues zur Verfügung stehen, wobei der rufende Teilnehmer bei der abgebrochenen Ursprungsverbindung Besetztsignal erhält und wobei über die betreffende Leitung anstelle der Ursprungsverbindung die betreffende Zielverbindung hergestellt wird, wodurch eine Verkehrsverdrängung von Zielverbindungen durch Ursprungsverbindungen unterbunden ist.

Zur Realisierung der zuvor erläuterten technischen Maßnahmen ist in der Vermittlungsstelle V in einem Steuerwerksspeicher T ein Speicherzeilen ta bis tn aufweisender Speicherteil vorgesehen. Diese Speicherzeilen sind den Verbindungsleitungen La bis Ln individuell zugeordnet. In nicht gezeigten Speicherelementen dieser Speicherzeilen ist einzeln für jede der Verbindungsleitungen gespeichert, ob sie belegt oder frei ist, und ob es sich - sofern sie belegt ist - um eine Ursprungsverbindung oder um eine Zielverbindung handelt. Handelt es sich um eine Ursprungsverbindung, so wird ferner gespeichert, ob der betreffende Verbindungsaufbau gänzlich noch bevorsteht (d.h. die erste zu wählende Ziffer ist noch nicht eingetroffen oder ist noch nicht vollständig eingetroffen), oder ob er noch in der Abwicklung begriffen ist und ob er sich noch in einem solchen Stadium der Abwicklung befindet, in dem bei neu auftretenden Verbindungsherstellungsaufträgen für Zielverbindungen der bisherige Verbindungsaufbau für die Ursprungsverbindung zugunsten der Zielverbindung abgebrochen werden kann.

Dieses Stadium der Abwicklung der Verbindungsherstellung für eine Ursprungsverbindung kann auf verschiedene Weise technisch festgelegt sein. Es ist möglich, bei Ursprungsverbindungen die in der Vermittlungsstelle jeweils für die betreffende Verbindungsherstellung eintreffenden Wahlziffern abzuzählen und das genannte Stadium mit oder nach dem Eintreffen einer festgelegten Anzahl von Wahlziffern oder auch mit Beginn der ersten eintreffenden Wahlziffer zu beenden. Dieses Stadium kann also auch auf die Zeit vor, bzw. bis zum Wahlbeginn begrenzt sein. Es ist auch möglich, dieses Stadium durch eine Zeitmessung zu begrenzen, also durch eine mit der Belegung einer Verbindungsleitung beginnende Zeitspanne, nach deren Ablauf eine noch im Aufbau befindliche Ursprungsverbindung nicht mehr durch einen neuen Verbindungsherstellungsauftrag für eine Zielverbindung verdrängt werden kann. Es ist darüberhinaus auch möglich, das genannte Stadium der Herstellung einer Ursprungsverbindung durch Eintreffen eines Wahlendekennzeichens oder eines Meldekennzeichens zu begrenzen.

In allen diesen Fällen wird in einer Speicherzeile einer Verbindungsleitung, über die eine Ursprungsverbindung gerade aufgebaut wird, gespeichert, ob sich die betreffende Verbindungsherstellung noch in dem Stadium befindet, in dem diese Verbindungsleitung noch zur Herstellung einer Zielverbindung zur Auswahl steht, d.h. unter Abbruch des der Herstellung der Ursprungsverbindung über diese Verbindungsleitung dienenden Verbindungsaufbaues und unter Besetztzeichenaussendung an den rufenden Teilnehmer bei der Ursprungsverbindung. Diese Speicherung kann die genannte Anzahl der in Zusammenhang der Ursprungsverbindung jeweils bereits eingetroffenen Die Such- und Auswahleinrichtung B prüft also nicht nur die freien Verbindungsleitungen - diese bei jedem neuen Verbindungsherstellungsvorgang immer zuerst - sondern in zweiter Linie auch die Verbindungsleitungen, über die eine Verbindungsherstellung für eine Ursprungsverbindung sich in dem erläuterten Stadium der Verbindungsherstellung befindet. Sie führt diese Prüfung anhand der in den leitungsindividuellen Speicherzellen ta bis tn gespeicherten Werte durch. - Wird eine Verbindungsherstellung für eine Ursprungsverbindung zugunsten einer Zielverbindung in der beschriebenen Weise abgebrochen, so wird für den rufenden Teilnehmer bei der Ursprungsverbindung die Aussendung eines Besetztsignales (Gassenbesetzt) eingeschaltet. Hierzu wird ein entsprechendes Signal von der Vermittlungsstelle V zum Konzentrator U übertragen, in dem die Besetztsignalanschaltung erfolgt.

Durch die Erfindung wird einer unerwünschten (s.o.) Priorisierung von Ursprungsverbindungen gegenüber Zielverbindungen entgegengewirkt, und es wird ein nachträglicher Verlust von bereits geleisteter Arbeit an Informationsaufnahme- und -verarbeitungsvorgängen sowie an Steuerungs- und Einstellvorgängen vermieden.

Die angesprochene Priorisierung des Ursprungsverkehrs aufgrund seiner Wartemöglichkeit macht sich in der angegebenen Weise besonders störend in den häufig auftretenden Fällen von planerisch nicht vorher erfaßbarer Schieflast ("Verkehrsschiefe",vergl. NTG-Empfehlung 0903, Nr. 443 in der Nachrichtentechnischen Zeitschrift, Band 37/1984, Heft 7, Seite 465 ff) und bei Überlast sehr nachteilig bemerkbar, wobei letztere im allgemeinen zu einem überproportionalen Ansteigen des Ursprungsverkehrs gegenüber dem Zielverkehr, also ebenfalls zu Schieflast führt. Dieser gesteigerten Benachteiligung des Zielverkehrs kann zusätzlich entgegengewirkt werden, indem in Abhängigkeit vom Verkehrs- und/oder Belegungsangebot der beiden genannten Verkehre (mittels entsprechender an sich bekannter Meßeinrichtungen erfaßbar) das Stadium der Verbindungsherstellung, innerhalb dessen ein Abbruch einer Ursprungsverbindung zugunsten einer Zielverbindung ermöglicht ist, flexibel begrenzt wird, und zwar nach Maßgabe eines statistisch gewonnenen und tageszeitlich variierenden und/oder eines laufend gemessenen Verkehrsangebotes bzw. Verlustes. Anhand entsprechd. Angaben hierüber, die in dem Steuerwerk gespeichert oder von geeigneten Meßeinrichtungen laufend ermittelt werden, wird bei stärkerem Verkehrsangebot oder entsprechender Belastung oder entsprechendem Verlust dieses Stadium erweitert, und umgekehrt. Hiernach richtet sich das Ausmaß der Möglichkeit für Zielverbindungen, unter Abbruch von Ursprungsverbindungen durchgeschaltet zu werden.

## Patentansprüche

1. Schaltungsanordnung für Fernmeldevermittlungsanlgen, insbesondere Fernsprechvermittlungsanlagen, in denen an eine Vermittlungsstelle (V) eine Untervermittlungsstelle (U), insbesondere ein Konzentrator, über ein Bündel (L) von Leitungen (La,...,Ln) angeschlossen ist für deren verbindungsindividuelle Belegung in der Vermittlungsstelle (V) und in der Untermittlungsstelle (U) jeweilige Auswahleinrichtungen (A, B) vorgesehen sind und wobei die Leitungen wenigstens teilweise alternativ sowohl in der einen als auch in der anderen Verbindungsaufbaurichtung belegbar sind, und wobei in den Fernmeldevermittlungsanlagen für von an die betreffende Untervermittlungsstelle (U) angeschlossenen Teilnehmerstellen her initiierten Ursprungsverbindungen, die in der einen Verbindungsaufbaurichtung herzustellen sind, bei Belegtsein der bereitgestellten Leitungen (La,...,Ln) Wartemöglichkeit besteht, jedoch nicht - zumindest in wesentlich geringerem Ausmaß - für Zielverbindungen zu diesen an die betreffende Untervermittlungsstelle (U) angeschlossenen Teilnehmerstellen, **dadurch gekennzeichnet,**

daß in der Vermittlungsstelle (V) ein Steuerwerkspeicher (T) mit leitungsindividuellen Speicherzellen (ta...tn) zur Speicherung von Informationen darüber vorgesehen ist, ob die zugehörige Leitung (La...Ln) frei oder belegt ist und - im Fall des Belegtseins - ob es sich um eine Zielverbingung oder eine Ursprungsverbindung handelt, und - im Fall einer Ursprungsverbindung - ob der Verbindungsaufbau sich in einem Stadium befindet in dem er zugunsten einer Zielverbindung abgebrochen werden kann und daß die vermittlungsseitige Auswahleinrichtung (B) derart ausgestaltet ist, daß sie anhand der in den leitungsindividuellen Speicherzellen (ta,tb....tn) gespeicherten Informationen veranlasst,
- daß bei Belegtsein sämtlicher Leitungen (La...Ln) diejenigen Leitungen die für Ursprungsverbindungen belegt sind und über die der betreffende Verbindungsaufbau erst noch bevorsteht oder noch in der Abwicklung begriffen ist, bei neu auftretenden Durchschaltungsaufträgen zur Herstellung von Zielverbindungen für eine Suche und Auswahl einer Leitung (La...Ln) unter Abbruch des jeweils der Herstellung einer Ursprungsverbindung über diese Leitung dienenden Verbindungsaufbaus zur Verfügung stehen,
- daß der rufende Teilnehmer bei der abgebrochenen Ursprungsverbindung Besetztsignal erhält und
- daß über die betreffende Leitung anstelle der Ursprungsverbindung die betreffende Zielverbindung hergestellt wird, so daß eine Verkehrsverdrängung von Zielverbindungen durch Ursprungsverbindungen unterbunden ist.

2. Schaltungsanordnung nach Anspruch 1, **gekennzeichnet durch,**
bei Belegung durch im Aufbau befindliche Ursprungsverbindungen für die Herstellung von Zielverbindungen in Abhängigkeit davon, daß die Anzahl der bereits abgegebenen Wahlkennzeichen eine vorgegebene Anzahl nicht überschritten hat, verfügbare Leitungen (La...Ln).

3. Schaltungsanordnung nach Anspruch 1, **gekennzeichnet durch,**
bei Belegung durch im Aufbau befindliche Ursprungsverbindungen für die Herstellung von Zielverbindungen in Abhängigkeit davon, daß seit dem Zeitpunkt der Abgabe des ersten Wahlkennzeichens eine bestimmte Mindest-Zeitspanne verstrichen ist, verfügbare Leitungen (La...Ln)

4. Schaltungsanordnung nach Anspruch 1, **gekennzeichnet durch,** bei Belegung durch im Aufbau befindliche Ursprungsverbindungen für die Herstellung von Zielverbindungen in Abhängigkeit davon, daß das Wahlendekennzeichen noch nicht eingetroffen ist, verfügbare Leitungen (La...Ln).

5. Schaltungsanordnung nach Anspruch 1, **gekennzeichnet durch,** bei Belegung durch im Aufbau befindliche Ursprungsverbindungen für die Herstellung von Zielverbindungen in Abhängigkeit davon, daß das Meldekennzeichen seitens des gerufenen Teilnehmers noch nicht eingetroffen ist, verfügbare Leitungen (La...Ln).

6. Schaltungsanordnung nach Anspruch 1, **gekennzeichnet durch,** bei Belegung durch im Aufbau befindliche Ursprungsverbindungen für die Herstellung von Zielverbindungen in Abhängigkeit davon, daß die erste Wahlziffer seitens des rufenden Teilnehmers noch nicht oder noch nicht vollständig eingetroffen ist, verfügbare Leitungen (La...Ln).

7. Schaltungsanordnung nach Anspruch 1, **gekennzeichnet durch,** ein nach Maßgabe eines statistisch gewonnenen und tageszeitlich variierenden und/oder eines laufend gemessenen Verkehrsangebotes bzw. Verlustes flexibel begrenztes Stadium der Verbindungsherstellung, innerhalb dessen ein Abbruch einer Ursprungsverbindung zugunsten einer Zielverbindung ermöglicht ist.

## Claims

1. Circuit arrangement for telecommunications exchanges, especially telephone exchanges, in which a sub-exchange (U), especially a concentrator, is connected to an exchange (V) via a trunk group (L) of lines (La,...,Ln) for the individual connection occupancy of which there are provided in each case selector devices (A, B) in the exchange (V) and in the sub-exchange (U), and it being possible to occupy the lines, at least partially, alternatively in both the one and the other connection set-up direction, and there being a queueing capability in the telecommunications exchanges for source connections which are to be made in the one connection set-up direction and are initiated by subscriber stations connected to the relevant sub-exchange (U), in the event of the lines (La,...,Ln) which have been prepared being busy, but not - at least to an essentially smaller extent - for destination connections to these subscriber stations connected to the relevant sub-exchange (U), characterised in that a control unit store (T) with line-individual storage cells (ta...tn) is provided in the exchange (V), for the storage of information as to whether the associated line (La...Ln) is free or busy, and - in the case of it being busy - whether it concerns a destination connection or a source connection, and - in the case of it being a source connection - whether the connection set-up is in a phase in which it can be interrupted in favour of a destination connection,

- and in that the selector device (B) on the connection side is configured such that, on the basis of the information stored in the line-individual storage cells (ta, tb,...tn), it ensures,
- that, if all the lines (La...Ln) are busy, those lines which are busy with source connections and over which the relevant connection set-up is still only imminent or is still in the course of implementation are made available for a search and selection of a line (La...Ln) in the event of newly arising through-connection demands for making destination connections, by interruption of the relevant connection set-up used for making a source connection via this line,
- that the calling subscriber receives a busy signal in the event of the source connection being interrupted, and
- that the relevant destination connection is made over the relevant line instead of the source connection, so that a traffic displacement of destination connections is forestalled by source connections.

2. Circuit arrangement according to Claim 1, characterised by available lines (La....Ln) for making destination connections in the event of lines being busy with source connections in the course of being set up, subject to the number of already issued dialling codes not having exceeded a predetermined number.

3. Circuit arrangement according to Claim 1, characterised by available lines (La...Ln) for making destination connections in the event of lines being busy with source connections in the course of being set up, subject to a specific minimum time span having elapsed after the point in time at which the first dialling code was issued.

4. Circuit arrangement according to Claim 1, characterised by available lines (La...Ln) for making destination connections in the event of lines being busy with source connections in the course of being set up, subject to the final dialling code not yet having being received.

5. Circuit arrangement according to Claim 1, characterised by available lines (La...Ln) for making destination connections in the event of lines being busy with source connections in the course of being set up, subject to the answering code on the part of the called subscriber not yet having being received.

6. Circuit arrangement according to Claim 1, characterised by available lines (La...Ln) for making destination connections in the event of lines being busy with source connections in the course of being set up, subject to the first dialled digit on the part of the calling subscriber not yet having been received, or not yet having been received completely.

7. Circuit arrangement according to Claim 1, characterised by a connection-making phase which is flexibly limited in accordance with an offered traffic load or loss which is obtained statistically and varies with the time of day and/or is measured continuously, within which phase an interruption of a source connection in favour of a destination connection is facilitated.

**Revendications**

1. Montage pour installations de commutation de télécommunications, notamment des installations de commutation téléphonique, dans lesquelles un sous-central (U), notamment un concentrateur, est raccordé à un central (V) par l'intermédiaire d'un faisceau (L) de lignes (La..., Ln), et dans lequel, pour l'occupation individuelle pour chaque liaison de ces lignes, il est prévu dans le central (V) et dans le sous-central (U), des dispositifs de sélection (A,B), et dans lequel les lignes peuvent être occupées au moins partiellement alternativement aussi bien dans un sens d'établissement d'une liaison que dans l'autre sens, et dans lequel dans les installations de commutation de télécommunications, il existe, pour des liaisons de départ, déclenchées à partir de postes d'abonnés raccordés au sous-central (U) considéré et devant être établies dans un sens d'établissement de liaison, lors de l'occupation des lignes (La...Ln) préparées, une possibilité d'attente, mais pas -au moins à un degré très faible- pour des liaisons de destination aboutissant à ces postes d'abonnés raccordés au sous-central (U) considéré,

caractérisé par le fait que dans le central (V), il est prévu une mémoire (T) d'unités de commande, qui comporte des cellules (ta...tz) prévues individuellement pour les lignes et servant à mémoriser des informations indiquant si la ligne (La...Ln) associée est libre ou occupée et -dans le cas d'une occupation- s'il s'agit d'une liaison de destination ou d'une liaison de départ et -dans le cas où il s'agit d'une liaison de départ- si l'établissement de la liaison en est à un stade auquel elle peut être interrompu en faveur d'une liaison de destination, et que le dispositif de sélection (B) situé dans le central est agencé de manière à déclencher, sur la base des informations mémorisées dans les cellules de mémoire (ta, tb...tn) prévues individuellement pour les lignes, les opérations suivantes :

- dans le cas où toutes les lignes (La....Ln) sont occupées, les lignes, qui sont occupées pour les liaisons de départ et au moyen desquelles l'établissement considéré d'une liaison est encore en préparation ou est actuellement en cours, sont disponibles lors de l'arrivée de nouveaux ordres d'interconnexion pour l'établissement de liaisons de destination, pour une recherche et une sélection d'une ligne (La...Ln) moyennant l'interruption de l'établissement d'une liaison utilisée respectivement pour l'établissement d'une liaison de départ par l'intermédiaire de cette ligne,
- l'abonné appelant reçoit un signal d'occupation dans le cas où la liaison de départ est interrompue, et
- la liaison de destination considérée est établie par l'intermédiaire de la ligne considérée, à la place de la liaison de départ, de sorte qu'un évincement de liaisons de destination par des liaisons de départ dans le trafic est supprimé.

2. Montage suivant la revendication 1, caractérisé par l'existence de lignes (La...Ln) qui, en cas d'occupation par des liaisons de départ en cours d'établissement, est disponible pour l'établissement de liaisons de destination en fonction du fait que le nombre des indicatifs de sélection déjà délivrés n'a pas dépassé un nombre prédéterminé.

3. Montage suivant la revendication 1, caractérisé par l'existence de lignes (La...Ln) qui, en cas d'occupation par des liaisons de départ en cours d'établissement, est disponible pour l'établissement de liaisons de destination en fonction du fait qu'à partir de l'instant de la délivrance du premier indicatif de sélection, il s'écoule un intervalle de temps minimum déterminé.

4. Montage suivant la revendication 1, caractérisé par l'existence de lignes (La...Ln) qui, en cas d'occupation par des liaisons de départ en cours d'établissement, est disponible pour l'établissement de liaisons de destination en fonction du fait que l'indicatif de fin de sélection n'est pas encore arrivé.

5. Montage suivant la revendication 1, caractérisé par l'existence de lignes (La...Ln) qui, en cas d'occupation par des liaisons de départ en cours d'établissement, est disponible pour l'établissement de liaisons de destination en fonction du fait que l'indicatif de signalisation n'est pas encore apparu chez l'abonné appelé.

6. Montage suivant la revendication 1, caractérisé par le fait que l'existence de lignes (La...Ln) qui, en cas d'occupation par des liaisons de départ en cours d'établissement, est disponible pour l'établissement de liaisons de destination en fonction du fait que le premier chiffre de sélection n'est pas encore apparu ou ne l'est pas encore complètement chez l'abonné appelant.

7. Montage suivant la revendication 1, caractérisé par le fait que le stade d'établissement de la liaison, endeçà duquel une interruption de la liaison de départ est possible en faveur d'une liaison de destination, est limité de façon souple en fonction d'une offre de trafic ou d'une perte obtenue de façon statistique et qui varie journellement et/ou est mesurée en permanence.